# EUROPEAN PATENT APPLICATION

(11) **EP 1 220 559 A1**
(43) Date of publication of application: **03.07.2002**
(21) Application number: 00403712.3
(22) Date of filing: 29.12.2000
(51) Int. Cl.: H04Q 7/38

(54) **Communication system, communication unit and method of location determination**

(71) Applicant: MOTOROLA, INC., Schaumburg, IL 60196 (US)
(72) Inventor: Calin, Doru, 78990 Elancourt (FR); Goeusse, François, 91620 Nozay (FR); Boixadera, Francesc, 92330 Sceaux (FR); Taffin, Arnauld, 75014 Paris (FR)
(74) Representative: Litchfield, Laura Marie

(57) **Abstract**

A communication system includes a plurality of serving communication units operably coupled to a controller and providing communication to a plurality of mobile communication units. At least one of the plurality of mobile communication units (402) transmits (410) a location request signal (410) on a dedicated location resource. At least one neighbouring serving communication unit (406, 408) is made aware of the location request signal (410) and utilises said dedicated location resource for monitoring transmissions from the at least one of the plurality of mobile communication units (402) to assist locating said unit. A communication unit, method for location determination and method of mitigating a near-far effect are provided.

This enables a reduction in the amount of signalling and complexity required for the location determination process in a UMTS system. It is simple to implement and in a TDD mode the dedicated location channel is easy to monitor since TDD BTSs are synchronized. The process mitigates the effect of near-far interference and increases the measurement accuracy location in location determination processes.

## Description

### Field of the Invention

This invention relates to location procedures in a wireless communication system. The invention is applicable to, but not limited to, location procedures in the context of near-far interference problems in a UMTS TDD communication system.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

Wireless communication systems are distinguished over fixed communication systems, such as the public switched telephone network (PSTN), principally in that mobile stations move between BTS (and/or different service providers) and, in doing so, encounter varying radio propagation environments.

Methods for communicating information simultaneously exist where communication resources in a communication network are shared by a number of users. Such methods are termed multiple access techniques. A number of multiple access techniques exist, whereby a finite communication resource is divided into any number of physical parameters, such as:
(i) frequency division multiple access (FDMA) whereby the total number of frequencies used in the communication system are shared,
(ii) time division multiple access (TDMA) whereby each communication resource, say a frequency used in the communication system, is shared amongst users by dividing the resource into a number of distinct time periods (time-slots, frames, etc.), and
(iii) code division multiple access (CDMA) whereby communication is performed by using all of the respective frequencies, in all of the time periods, and the resource is shared by allocating each communication a particular code, to differentiate desired signals from undesired signals.

Within such multiple access techniques, different duplex (two-way communication) paths are arranged. Such paths can be arranged in a frequency division duplex (FDD) configuration, whereby a frequency is dedicated for up-link communication and a second frequency is dedicated for down-link communication. Alternatively, the paths can be arranged in a time division duplex (TDD) configuration, whereby a first time period is dedicated for up-link communication and a second time period is dedicated for down-link communication.

In a wireless communication system, each BTS has associated with it a particular geographical coverage area (or cell). The coverage area is defined by a particular range where the BTS can maintain acceptable communications with MSs operating within its serving cell. Often these cells combine to produce an extensive coverage area.

The communication link from the BTS to a MS is referred to as the down-link (DL). Conversely, the communication link from a MS to the BTS is referred to as the up-link (UL).

In the field of this invention it is known that in any classical location process there is a need, in an emergency situation, for a communication unit to be able to listen to (and therefore to be listened by) three Base Transceiver Stations (BTSs) - see IEEE Communication Magazine, vol. 36, No. 4, April 1998, "Wireless Geolocation Systems and Services".

Apart from Soft HandOff (SHO) situations, it is very likely that in CDMA environments, such as UMTS, IS-95, CDMA 2000, that the MS may suffer from near-far effect problems, particularly when power control of the MS transmit power is only controlled by the serving BTS. In this situation, it is impossible for the MS to receive signals from more than one BTS.

The near-far effect is mainly due to the fact that usually the networks are dimensioned to reduce the interference (both intra and inter-cell) as much as possible, for obvious capacity reasons. That means that reducing the inter-cell interference will automatically reduce the chance to listen (be listened) to (at other) BTSs

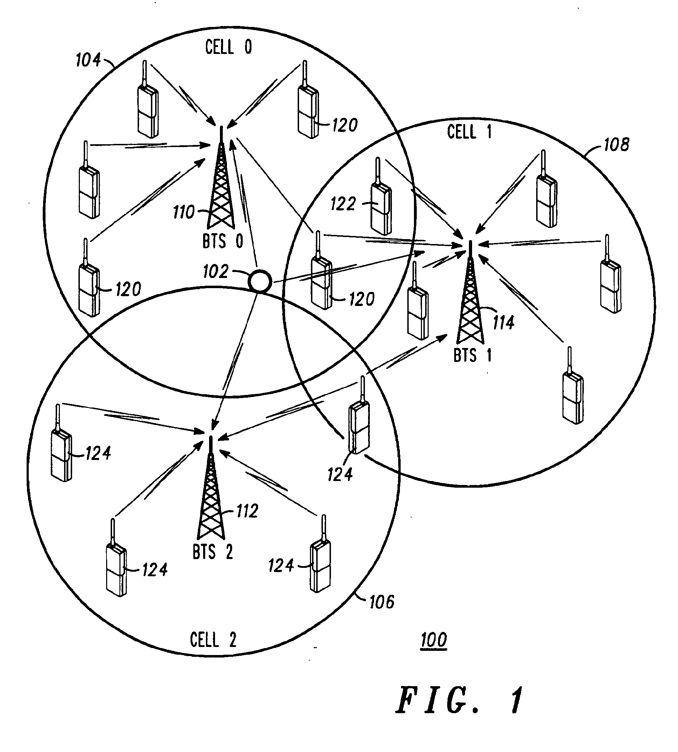

Referring first to FIG. 1, a representation of the near-far effect on wireless location in a current CDMA system 100, is shown. Three communication cells 104, 106, 108, are depicted, which are served by three BTSs: BTS-0 110, BTS-1 114 and BTS-2 112. The Target Mobile Station (MS) 102 whose location is desired is being served by BTS-0 110, whilst BTS-1 114 and BTS-2 112 will also be used for location purposes. In such a scenario, the Target MS 102 is only power controlled by BTS-0 110.

It is known that the near-far effect in wireless communication systems has two facets, interference to the MS in an up-link channel and interference to BTSs in a down-link channel.

As power control is used in cell-0 104, all MSs served by BTS-0 110 are co-ordinated such that the received signal strength of each arrives at BTS-0 110 with approximately equal power. The same is true for the MSs being served by BTS-1 114 and BTS-2 112, if they operate power control in cell-1 108 and cell-2 106 respectively.

In practice, it is very likely the signal from the Target MS 102 at BTS-1 114 and BTS-2 112 may experience severe multiple access interference from MSs being served by BTS-1 and BTS-2 since the Target MS is not power-controlled to those BTSs. The interference will consequently affect the ability of a conventional receiver to estimate correctly the information.

The near-far effect in an uplink channel is a very severe constraint when the Target MS's transmission 116 has to be listened to by several (at least three) BTSs. This is particularly the case when operating a Remote Positioning Technique (RPT).

FIG. 1 (with reverse (arrows) signal transmissions) 116 from BTS to MS 102) also applies to the near-far effect in a down-link channel. In the down-link case, the target MS 102 receives signals from different BTSs 110, 112, 114. BTS-0 110 performing the power control risks saturating the Target MS' receiver if the attenuation between BTS-0 110 and Target MS 102 is less important with respect to those corresponding to BTS-1 114 and BTS-2 112 signals (not performing power control). In that case the signals received at Target MS 102 from BTS-1 114 and BTS-2 112 experience multiple access interference from downlink transmissions on BTS-0 110.

The near far effect in a downlink channel is a very severe constraint when several BTSs (at least three) 110, 112, 114 have to be listened to by the target MS 102.

It is noteworthy that varying degrees of the near-fact effect problem exist in a cellular-based communication network. For location purposes, the stronger the near-far effect is, the higher the location error is. Hence, the ideal situation would be to receive perfectly a Target MS signal at a BTS 110, 112, 114 on the up-link channel or to receive perfectly BTS signals at the Target MS 102 on the down-link channel.

As a consequence, of such a near-far effect on accurate location positioning techniques, there is a need to provide means and methods to enable communication with three BTSs for users to avoid the "near-far effect" interference. Beyond the need to receive signals from three BTSs, the accuracy of the location estimation is significantly degraded by any interference or noise affecting the quality of the communication links between the MS 102 and BTS 110, 112, 114.

Clearly, the near-far effect remains a problem, even where efficient power-control mechanisms are employed. Very few efficient solutions exist to combat the near-far effect, particularly in CDMA based systems.

Three known techniques, to combat near-far effect, include:
(i) Emergency call situations (in E-911): where a MS (Target MS) transmits an emergency call, and in doing so may ignore any power-control constraints placed upon the MS and power up to the maximum possible level to mitigate near-far problems.
   However, such an emergency call at full power approach creates additional interference to the other (ongoing) calls. Furthermore, transmitting at maximum power is not a guarantee that the signals are received correctly at the Target MS (down-link), or BTS (up-link) if the BTS does not perform the power control.
(ii) the system takes advantage of a Soft HandOver (SHO) opportunity.
   However, for SHO to be useful for the location process, at least three BTSs must be involved for a hand-over process. This situation rarely occurs and is a huge drain on communication resource when it does.
(iii) the BTS managing the power-control with the MS shuts down periodically to introduce silence periods. Such silence periods allow further BTSs, that are suffering from the near-far effect, to be heard at the Target MS (as described in WO99/21388 "System and method for positioning a mobile station in CDMA cellular system" /Telefonaktiebolaget LM ERICSSON).
   However, this approach of creating periodic patterns in BTS transmissions is very complex. The main inconvenience of this technique is that, in shutting down the BTS transmission, all current Real Time (RT) transmissions are disturbed which may initiate call/service terminations.

Hence, the existing techniques are either very dependent on the prevailing conditions, to allow SHO to be used, or they substantially disturb existing calls, by requiring creation of regular silence periods by shutting down BTS transmission. As such, prior art techniques, in resolving the near-far effect, are rarely acceptable in normal operation conditions.

Thus a need exists in the field of the present invention to provide a communication system, a communication unit and a method of location determination wherein the abovementioned disadvantages may be alleviated.

### Statement of Invention

In accordance with a first aspect of the present invention there is provided a communication system in a communication system, as claimed in claim 1.

In accordance with a second aspect of the present invention there is provided a communication unit, as claimed in claim 12.

In accordance with a third aspect of the present invention there is provided a method for locating a communication unit and/or method for mitigating the near-far effect, as claimed in claim 13.

### Brief Description of the Drawings

A communication system, communication unit, and method for locating a communication unit in a communication system incorporating the present invention will now be described, by way of example only, with reference to the accompanying drawings, in which:
FIG. 1 shows a prior art CDMA communication system illustrating the problematic near-far effect.
FIG. 2 shows a communication system, in accordance with a preferred embodiment of the invention.
FIG. 3 shows a mobile station, in accordance with a preferred embodiment of the invention.
FIG. 4 shows a communication system and associated signalling protocol for avoiding the near-far effect, in accordance with a preferred embodiment of the invention.
FIG. 5 shows a timing diagram for up-link load spreading in a TDD CDMA communication system.

### Description of Preferred Embodiments

In summary, the present invention utilises the slotted structure in a TDD mode of a UMTS communication system, to combat the near-far interference (during a location determination process for example). Such a technique combats the near-far effect, whilst minimising the impact on system signalling. This is achieved by providing a Common Location CHannel (CLCH).

In a TDD mode and, particularly with an opportunity driven multiple access (ODMA) configuration of TDD in a UMTS system, the communication system advantageously provides a slotted time structure. Each voice call is given one time-slot (TS) in an up-link channel and one TS in a down-link channel in a 15 TS frame. Multi-slot operation is provided for other higher bit-rate services. However, a large number of slots are available each frame for the MS to perform measurements on other signals.

Furthermore, a TDD mode implicitly suffers less from near-far effect problems due to the time division component. This ensures discontinuous transmission and reception of signals at a Target MS. In addition, TDD cells are time-synchronized. This ensures that, by acquiring synchronization on a TDD cell, implicit synchronisation on all other cells operating a TDD mode in the coverage area is achieved.

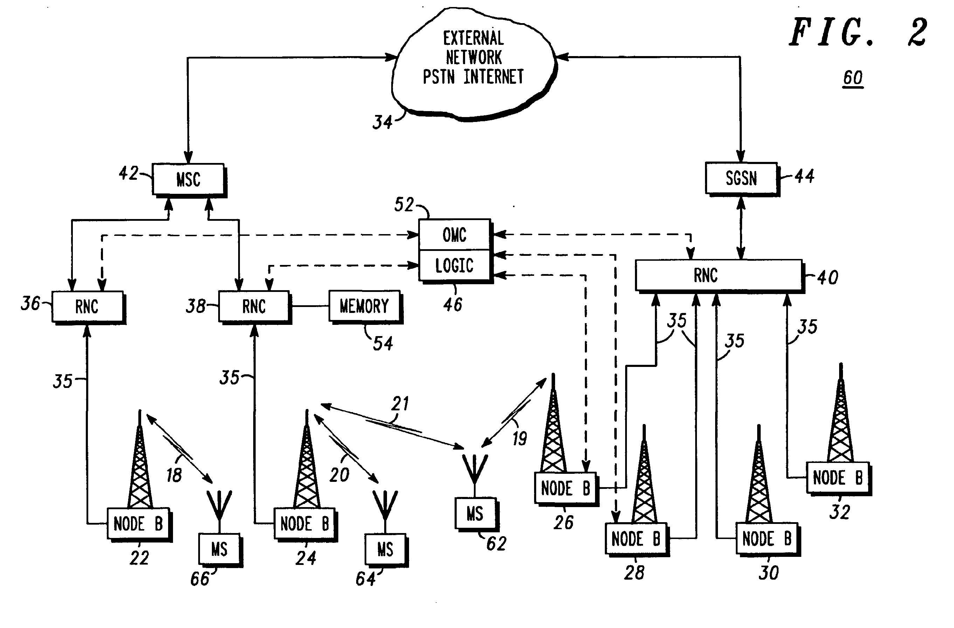

Referring now to FIG. 2, a cell-based telephone communication system 60 in outline is shown, supporting a Universal Mobile Telecommunications Standard (UMTS) air-interface in accordance with a preferred embodiment of the invention.

A plurality of subscriber units 62-66 communicate over the selected air-interface 18-21 with a plurality of Node Bs - in UMTS terminology - 22-32. A limited number of MSs 62-66 and Node Bs 22-32 are shown for clarity purposes only.

The Node Bs 22-32 may be connected to external networks, for example, the public-switched telephone network (PSTN) or the Internet 34, through Radio Network Controller stations (RNC) (in UMTS terminology) 36-40 and any number of mobile switching centres (MSCs) 42 and Serving GPRS Support Nodes (SGSN) 44.

Each Node B 22-32 contains one or more transceiver units and communicates with the rest of the cell-based system infrastructure via the Iub interface 35.

Each RNC 36-40 may control the operation of one or more Node Bs 22-32. Each MSC 42 (only one shown for clarity purposes) provides a gateway to the external network 34, whilst the SGSN 44 links to external packet networks.

The Operations and Management Centre (OMC) 46 is operably connected to RNCs 36-40 and Node Bs 22-32 (shown only with respect to Node B 26 and Node B 28 for clarity), and administers and manages the parts of the cellular telephone communication system 60, as will be understood by those skilled in the art.

In accordance with a preferred embodiment of the present invention, at least one of the RNCs 36-40, has been adapted to manage and control transmissions to and from a to-be-located MS. Furthermore, the RNC 36-40 has been adapted to receive the indication from the Node B 22-32 (or BTS) of the location determination request signal transmitted on the dedicated location determination resource.

In addition, the RNC 36-40 has been adapted to inform a number of Node B's 22-32 of such a request, or select a number of Node B's 22-32 to inform, such that location determination measurements can be calculated. Finally, if the RNC 36-40 believes that a sufficient number (at least three) Node B's 22-32 are not able to receive transmissions from the to-be-located MS, the RNC 36-40 may instigate a load spreading procedure as described with reference to FIG. 5.

In accordance with a preferred embodiment of the present invention, at least one of the Node B's (or BTS) 22-32, has been adapted to be a serving Node B to receive the location request signal from the to-be-located MS, and inform the RNC 36-40 of such a request. Furthermore, the Node B may acknowledge receipt of such a request.

It is within the contemplation of the invention that such control of the location determination process may, as an alternative to the RNC 36-40, be controlled in another part of the infrastructure, for example by at least one of the Node Bs 22-32 or the OMC 46.

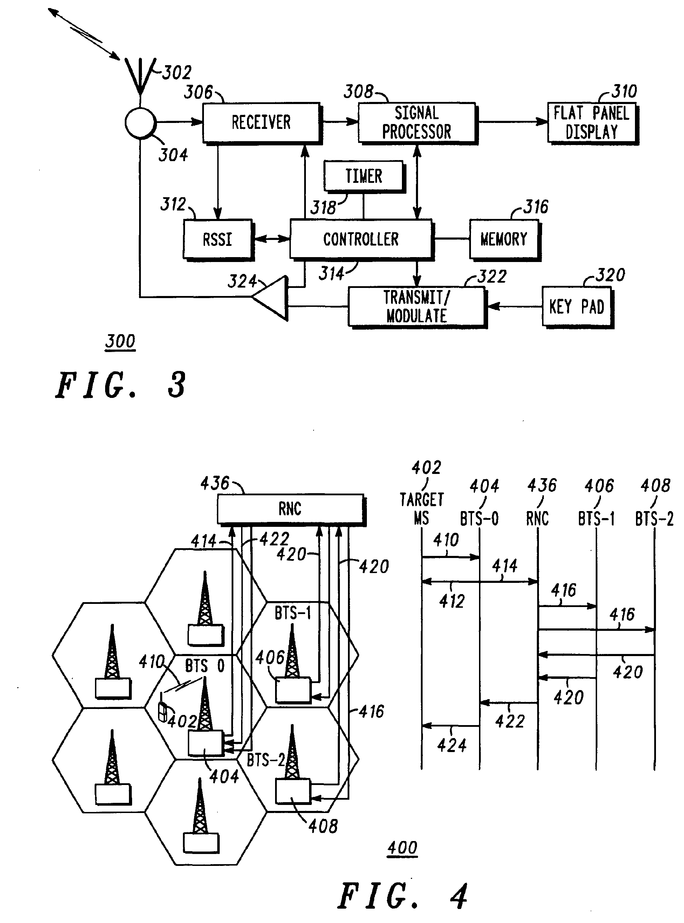

Turning now to FIG. 3, there is shown a block diagram of a subscriber unit (MS) 300 adapted to support the inventive concepts of the preferred embodiments of the present invention. The MS 300 contains an antenna 302 preferably coupled to a duplex filter or circulator 304 that provides isolation between receive and transmit chains within the MS 300.

The receiver chain, as known in the art, includes scanning receiver front-end circuitry 306 (effectively providing reception, filtering and intermediate or baseband frequency conversion). The scanning front-end circuit is serially coupled to a signal processing function 308.

An output from the signal processing function is provided to a suitable output device 310, such as a screen or flat panel display.

The receiver chain also includes received signal strength indicator (RSSI) circuitry 312, which in turn is coupled to a controller 314 for maintaining overall subscriber unit control. The controller 314 is also coupled to the scanning receiver front-end circuitry 306 and the signal processing function 308 (generally realised by a DSP).

The controller 314 may therefore receive bit error rate (BER) or frame error rate (FER) data from recovered information. The controller is also coupled to a memory device 316 that stores operating regimes, such as decoding/encoding functions, synchronisation patterns, code sequences and the like.

In accordance with the preferred embodiment of the invention, the memory device 316 stores data relating to neighbouring cell sites or systems. Furthermore, a timer 318 is operably coupled to the controller 314 to control the timing of operations (transmission or reception of time-dependent signals) within the MS 300, particularly in regard to TDD mode timing.

As regards the transmit chain, this essentially includes an input device 320, such as a keypad, coupled in series through transmitter/modulation circuitry 322 and a power amplifier 324 to the antenna 302. The transmitter/modulation circuitry 322 and the power amplifier 324 are operationally responsive to the controller.

Of course, the various components within the MS 300 can be realised in discrete or integrated component form, with an ultimate structure therefore being merely an arbitrary selection.

In accordance with the preferred embodiment of the invention, scanning receiver front-end circuitry 306, the transmitter/modulation circuitry 322 and power amplifier 324, under the control and guidance of the signal processing function 308, memory device 316, timer function 318 and controller 314 have been adapted to receive and/or transmit to the infrastructure in the CLCH channel. This is performed in response to instruction from the infrastructure to enter such a mode, or as a self-initiated function decided by the controller 314 in response to a recognition of the MSs operating conditions.

On entering such a mode, the subscriber unit 300 switches to a scanning mode of operation to receive and decode signal transmissions from neighbouring cells or systems.

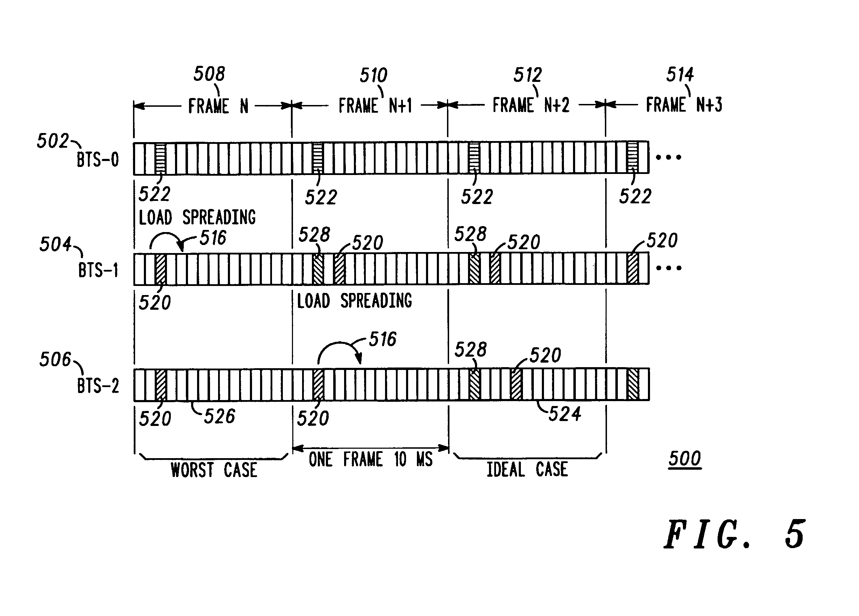

Referring now to FIG. 4, a communication system and associated signalling protocol 400 for avoiding the near-far effect is shown, in accordance with a preferred embodiment of the invention.

In order to highlight the benefits associated with the preferred embodiment of the present invention, in the use of a common location channel in TDD mode, the above scenario is viewed for both up-link and down-link cases.

The up-link and down-link cases are then considered with respect to signalling and time requirements. To highlight the benefits associated with the provision of a dedicated common location (determination) channel, indications of potential problems with a theoretical non-dedicated channel are provided.

### Up-link (UL) case:

First, let us consider a case where there is no dedicated location channel on the UL, and compare the process with a dedicated channel arrangement. The Target MS 402 generates an emergency call/location determination request. The emergency call is transmitted 410 on an up-link channel, for example, on the random access channel (RACH). The serving BTS, BTS-0 404, may send an acknowledgement signal 412, back to the target MS 402 to acknowledge receipt of the emergency call. A near-far problem condition exists, and therefore the emergency transmission will be received only at BTS-0 404, as shown.

As explained earlier, in order to locate the target MS 402, a triangulation of a further two BTS is required. To provide an opportunity for an emergency transmission of a Target MS 402 to be heard by other two BTSs (BTS-1 406 and BTS-2 408), two situations are provided:

First, the neighbours of BTS-0 404 are not informed of the situation. The Target MS 402 then would attempt to transmit in any time-slot (TS) hoping that the near-far problem will be weaker in one of the TS.

Clearly, such a non-controlled approach create additional interference on other TSs, increase battery consumption of the MS and still does not guarantee that the near-far effect will be any better in other TSs.

Secondly, at least one neighbour of BTS-0 404 is informed in accordance with the preferred embodiment of the present invention. Upon reception of the emergency call, BTS-0 404 informs 414 the Radio Network Controller (RNC) 436. The RNC 436 sends a request 416 to:
(a) any two neighbours of BTS-0 404, for example BTS-1 406 and BTS-2 408, if it is confident that both BTS-1 406 and BTS-2 408 have the ability to receive the emergency call signal of the Target MS 402 on an up-link channel. If RNC 436 believes that two BTS will not be able to successfully receive the emergency call transmission from MS 402, the RNC may instigate the spreading load procedure described with reference to FIG. 5 below;
   or
(b) any number of neighbours of BTS-0 404 (up to say, six). In this case, perhaps most or all of the neighbours will attempt to receive the emergency signal on the up-link transmitted by the Target MS 402. Alternatively, disjoint groups of two neighbours may be formed. These procedures are followed until the up-link emergency call signal from the Target MS 402 has been successfully received by three BTSs.

For the above requests, BTS-1 406 and BTS-2 408 (case (a)) or any other selected BTS-0's neighbours (case (b)) have to inform 420 the RNC 436 about which TS will be available, for example, using the spreading load procedure of FIG. 5.

Again, this approach of using a location request signal from the to-be-located MS in a non-dedicated timeslot has a number of drawbacks. The protocol transmission is too long for an emergency call, as it takes time to make the Target MS UL signal available at BTS-1 406 and BTS-2 408. BTS-1 406 and BTS-2 408 can communicate the TSs where Target MS can transmit after all TSs loads were checked and the load spreading procedure was performed.

In addition, processing times in the BTS and RNC and transfer time between RNC and BS delay the location determination process. Furthermore, the amount of - signaling is excessive as BTS-1 406 and BTS-2 408 have to send the information back to RNC 436, then back to Target MS going through BTS-0 404.

Nevertheless, such an emergency call signal technique may ensure successful reception by the respective BTSs 406, 408. It is therefore an improvement over prior art arrangements, even with the drawbacks.

### CLCH case on the up-link (UL) channel:

In accordance with the preferred embodiment of the invention, a new communication channel is proposed - termed a Common Location CHannel (CLCH). The focus of the CLCH is to reduce both the amount of signalling and the required time used in a location process.

A major benefit of the CLCH proposal is in its simplicity. The proposal is based upon a prior knowledge of which TS the Target MS 402 may succeed in transmitting a burst to other BTSs, initially affected by near-far interference.

In the preferred embodiment of the invention, a time-slot (TS) named CLCH, is dedicated for location purposes. In a TDD mode of operation, all BTSs are synchronized. Hence, the CLCH channel will be carried on the same TS in any cell.

To maximise a Target MS's chances to be successful when transmitting an emergency signal, two solutions are envisaged:
(a) always carry a light load of communication in the CLCH channel, even though no emergency calls may have been initiated. This is not particularly efficient due to the waste of resource capacity.
   However, more preferably:
(b) the CLCH channel is used as a traffic channel in ordinary conditions and only a small capacity of it is allocated for detecting any location request.

A Target MS 402 will initiate the emergency signal 410 on the known CLCH channel. The neighbouring BTSs will be informed as in the non-CLCH case. The main advantage is that BTS-1 406 and BTS-2 408 will now be able to immediately free up a CLCH TS. Thus, the emergency call signal, transmitted on the up-link channel by the Target MS 402, will be also received at BTS-1 406 and BTS-2 408. Hence, both speed of the location process and signalling required are improved over the non-CLCH process.

A guard time may be necessary after BTS-1 406 and BTS-2 408 have received the request from RNC 436, in order to better manage the communication load. This guard time may be known from actual traffic statistics, for example, as provided for in GSM.

In another embodiment it is possible that the CLCH is used for down-link traffic in normal conditions and upon reception of the request from the RNC 436, the relevant BTS simply stops transmitting on this downlink slot, thereby allowing reception on the uplink from the Target MS 402.

FIG. 4 shows the signalling required when no channel is dedicated for a location process versus a CLCH channel approach. Signals 410, 414, 416 are common to both procedures, while signals 420, 422, 424 are only needed when no CLCH exists in the uplink.

Once the required number of BTS (or Node B's) have monitored the to-be-located MS transmissions, the RNC preferably determines the location of the MS in accordance with any classical location technique, such as a Remote Positioning Location Process (RPLP) for up-link transmission case.

### Down-link (DL) case:

First, let us consider a case where there is no dedicated location channel on the DL, and compare the process with a dedicated channel arrangement. In the DL case, BTS-0 404 is responsible for the near-far effect. The RNC 436 then has to reduce the power transmission of BTS-0 404 to thereby allow reception of other BTS(s) signals at the Target MS 402.

Upon reception of an emergency signal, BTS-0 404 has to free up a TS where the other BTSs' signals may be received. The RNC 436 communicates 422 to BTS-0 404 the positions within the TDD frame of the broadcast channel (BCH) and synchronisation channel (SCH) for neighbouring cells of BTS-0 404. In a reciprocal manner, the RNC 436 also communicates 422 to the other BTS(s), say BTS-1 406 and BTS-2 408, the positions within the TDD frame of the broadcast channel (BCH) and synchronisation channel (SCH) for the cell of BTS-0 404.

If the BCH and SCH positions at BTS-1 406 and BTS-2 408 are known at BTS-0 404, BTS-0 404 will simply free corresponding TS(s). If the BCH and SCH positions at the neighbouring cells of BTS-0 404 are not known (namely they are not communicated to BTS-0 404 by RNC 436), the signalling procedure is substantially the same as in the up-link case steps 410-424. Then BTS-0 will decrease the load on the TS of BTS-0 404 that correspond to the BCH (and possibly SCH) of cells covered by BTS-1 406 and BTS-2 408.

### CLCH case on the down-link (DL) channel:

In accordance with the preferred embodiment of the present invention, the TDD cells are time-synchronized. As such, the CLCH will be positioned on the same slot in all TDD cells. Upon reception of the emergency signal, BTS-0 will simply reduce the communication load on the CLCH slot and the other BTS(s)' signals will be automatically received at the Target MS 402.

The down-link (DL) transmission, in accordance with the preferred embodiment of the present invention, is particularly useful for a Self Positioning Location Process (SPLP).

Referring now to FIG. 5, the load spreading concept in a TDD mode of UMTS for uplink transmissions 500 is illustrated. To emphasise the near-far effect problems, let us consider the scenario where the Target MS is power controlled only by the BTS-0 502 and that a SHO situation is not available (although the same principles apply for SHO cases).

In FIG. 5, TS-3 522 is used, in each frame for Target MS to/from BTS-0 502 communication. The worst case scenario 526 corresponds to the situation when the signal transmitted in TS-3 is strongly affected at BTS-1 504 and BTS-2 506 by the interference 520 created by the "local" MSs (those power controlled respectively by BTS-1 504 and BTS-2 506 in their particular cells).

Let us assume that near-far conditions make it impossible for the signal of the Target MS signal to be received accurately at BTS-1 504 and BTS-2 506 during the frame N 508. In such a situation, the load/interference on TS-3 522 at BTS-1 504 and BTS-2 506 is reduced in the next frames (frame N+1 510, frame N+2 512 etc.) by a load spreading 516 technique.

The selection of whether to perform load spreading 516 is a radio resource management issue, generally providing freedom to the Network Operator to specify the most convenient pattern. In this particular case, the load spreading 516 was moved on TS-3 522 at BTS-1 504 to the frame N+1 510. This results in the Target MS signal being able to be received at BTS-1 504 during the (N+1)th frame 510. At the BTS-2 506 the load spreading 516 was performed only at the frame N+2 512, which made a reception of the up-link Target MS signal during the (N+2)th 512 frame possible.

In this manner, by the (N+2)th frame, the ideal case 524 of no near-far interference can be achieved, with minimal impact on the network signalling.

It will be understood that the communication system, communication unit and method of hand-over described above provides the following advantages:
(i) introducing a Common Location CHannel (CLCH) in TDD mode of UMTS reduces substantially the amount of signalling and complexity required for the location process;
(ii) it is very simple to specify the CLCH: it is a Time Slot (TS) dedicated for location purposes;
(iii) easy to monitor CLCH: since TDD BTSs (or Node B's) are synchronized to the CLCH will be carried on the same TS in any cell; and
(iv) CLCH mitigates the effect of near-far interference in location processes and increases the location measurement accuracy;
(v) maximise the chances of emergency calls succeeding, since the interference is carefully managed in CLCH; and
(vi) no waste of radio resources: CLCH may be used as a traffic channel in ordinary conditions and only a part of capacity is left aside to be able to detect successfully any location requests.

Thus a communication system, a communication unit and a method of location determination have been provided wherein the abovementioned disadvantages with the prior art have been substantially alleviated.

## Claims

1. A communication system, comprising: a plurality of serving communication units providing communication to a plurality of mobile communication units, wherein the plurality of serving communication units are operably coupled to a controller, the communication system **characterised by**:
at least one of the plurality of mobile communication units (402) transmitting (410) a location request signal (410) on a dedicated location resource;
at least one neighbouring serving communication unit (406, 408) is made aware of the location request signal (410) and utilises said dedicated location resource for monitoring transmissions from the at least one of the plurality of mobile communication units (402) to assist locating said unit.

2. A communication system according to claim 1, wherein the communication system is a time-discontinuous communication system and the location request signal (410) is transmitted on a dedicated location determination time slot.

3. A communication system according to claim 1 or claim 2, wherein the at least one neighbouring serving communication unit (406, 408) is made aware of the location request signal (410) by receiving the location request signal directly from the at least one of the plurality of mobile communication units (402).

4. A communication system according to claim 1 or claim 2, wherein the at least one neighbouring serving communication unit (406, 408) is made aware of the location request signal (410) by receiving an indication from the controller said request has been initiated on the dedicated location determination resource.

5. A communication system according to claim 4, wherein the controller selects a number of neighbouring serving communication unit(s) (406, 408) to be made aware of said location request signal and transmits a request (416) to said number of neighbouring serving communication unit(s) (406, 408) until said location request signal (410) has been received successfully by at least three serving communication units.

6. A communication system according to any of the preceding claims, wherein, said controller (436) instigates a load spreading procedure by moving transmissions to and/or from at least one serving communication unit if at least three serving communication units are not able to successfully receive the location request signal.

7. A communication system according to any of preceding claims 4 to 6, wherein the at least one neighbouring serving communication unit (406, 408) is not made aware of the location request signal (410) and the at least one of the plurality of mobile communication units (402) transmits (410) said location request signal (410) on any resource to obtain location determination assistance from a number of neighbouring serving communication units (406, 408).

8. A communication system according to any of the preceding claims, wherein the dedication location determination resource is a traffic channel with a portion of said traffic channel assigned for transmission of said location determination request.

9. A communication system according to any of the preceding claims, wherein two dedication location determination resources are used, one in an up-link communication path and one in a down-link communication path.

10. A communication system according to claim 9, wherein the dedicated location determination resource is used in any one of the following arrangements:
(i) one dedicated location determination resource is used in said up-link communication path with a position of said location determination request known by a plurality of serving communication units (406, 408); or
(ii) one dedicated location determination resource is alternated between said up-link and down-link communication paths depending upon location traffic needs; or
(iii) two dedicated location determination resource are used, a first resource for the up-link communication path and a different second resource for the down-link communication path where both resources primarily support traffic information.

11. A communication system according to any of the preceding claims, wherein communication supports a slotted time structure mode of operation, in particular with an opportunity driven multiple access (ODMA) configuration of a time division duplex mode.

12. A communication unit adapted to operate in the communication system of any of the preceding claims.

13. A method of location determination, in particular a method of mitigating near-far effect for location determination, in a communication system comprising: a plurality of serving communication units providing communication to a plurality of mobile communication units, wherein the plurality of serving communication units are operably coupled to a controller, the method **characterised by** the steps of:
transmitting (410), by at least one of the plurality of mobile communication units (402), a location request signal (410) on a dedicated location resource;
receiving an indication of said location request signal (410) by at least one neighbouring serving communication unit (406, 408); and
monitoring transmissions from the at least one of the plurality of mobile communication units (402) on said dedicated location resource by said at least one neighbouring serving communication unit (406, 408).

14. A method according to claim 13, wherein the communication system is a time-discontinuous communication system and the step of transmitting a location request signal (410) includes transmitting on a dedicated location determination time slot.

15. A method according to claim 13 or claim 14, wherein the step of receiving an indication includes receiving the location request signal directly from the at least one of the plurality of mobile communication units (402).

16. A method according to claim 13 or claim 14, wherein the step of receiving an indication includes receiving an indication from the controller that said request has been initiated on the dedicated location determination resource.

17. A method according to claim 16, the method further **characterised by** the steps of:
selecting, by said controller, a number of neighbouring serving communication unit(s) (406, 408) to be made aware of said location request signal; and
transmitting a request (416) to said number of neighbouring serving communication unit(s) (406, 408) until said location request signal (410) has been received successfully by at least three serving communication units.

18. A method according to any of preceding claims 13-17, the method further characterise by the step of:
instigating, by said controller (436), a load spreading procedure, including the step of:
moving transmissions to and/or from at least one serving communication unit, if at least three serving communication units are not able to successfully receive the location request signal.

19. A method according to any of preceding claims 16 to 18, further **characterised by** the step of:
transmitting (410), by said at least one of the plurality of mobile communication units (402), said location request signal (410) on any resource to obtain location determination assistance from a number of neighbouring serving communication units (406, 408) if the step of receiving an indication of said location request signal (410) is unsuccessful.

20. A method according to any of preceding claims 13-19, wherein the dedication location determination resource is a traffic channel, the method further **characterised by** the step of:
assigning a portion of said traffic channel for transmission of said location determination request.

21. A method according to any of preceding claims 13-20, wherein two dedication location determination resources are used, one in an up-link communication path and one in a down-link communication path.

22. A method according to any of preceding claims 13-21, the method further **characterised by** any of the following steps:
(i) using one dedicated location determination resource in said up-link communication path with a position of said location determination request known by a plurality of serving communication units (406, 408); or
(ii) alternating one dedicated location determination resource between said up-link and down-link communication paths depending upon location traffic needs; or
(iii) using two dedicated location determination resource, a first resource for the up-link communication path and a different second resource for the down-link communication path where both resources primarily support traffic information.
